# EUROPEAN PATENT APPLICATION

(11) **EP 1 300 829 A1**
(43) Date of publication of application: **09.04.2003**
(21) Application number: 02255744.1
(22) Date of filing: 16.08.2002
(51) Int. Cl.: G10L 15/26, G10L 15/18, G01C 21/36, B60R 16/02

(54) **Technique for active voice recognition grammar adaptation for dynamic multimedia application**

(30) Priority: 05.10.2001 US 971816
(71) Applicant: Visteon Global Technologies, Inc., Dearborn, Michigan 48126-2490 (US)
(72) Inventor: Everhart, Charles Allen, Canton, MI 48188 (US)
(74) Representative: Simons, Alison Diane

(57) **Abstract**

A method and system for dynamically augmenting available voice commands in an automobile voice recognition system to actuate a vehicle subsystem is disclosed. The method includes scanning the voice recognition system for grammar data indicative of a system function, converting the grammar data to a usable command for access by a system user, and then storing the usable command in a system memory for use by the system user to carry out the system function.

## Description

### FIELD OF THE INVENTION

The present invention relates to speech recognition in automobiles and to systems that allow a user to control various vehicle functions through direct voice commands.

### BACKGROUND OF THE INVENTION

Speech recognition in an automobile provides a user direct control of various vehicle functions via a plurality of voice commands. One of the benefits of speech recognition is to provide the user with the capability of performing a variety of complex tasks while minimizing the amount of overhead involved in performing the tasks.

One difficulty not adequately addressed by prior art speech recognition system is the efficient and effective management of active available grammars (voice commands) in order to improve recognition accuracy. Current systems provide a fixed number of voice commands that must cover all the various vehicle systems to be controlled. One significant drawback of current systems is that a user is required to learn the numerous voice commands. For example, if a user wishes to play a specific song or a specific music disc, the user would have to know the list of songs and their order and the location of the music disc in the compact disc changer.

Therefore, there is a need for a new and improved system and method for augmenting the available voice commands dynamically, thus allowing the user to add features dynamically in accordance with a vehicle's status. Preferably, the new and improved system will use run time dynamic grammars in conjunction with the various multimedia states. Such run time dynamic grammars are grammars that can be generated from, for example, ASCII data that are provided to a vehicle's speech recogniser.

### SUMMARY OF THE INVENTION

In accordance with an aspect of the present invention a method and system for dynamically augmenting available voice commands in an automobile voice recognition system to actuate a vehicle subsystem is disclosed. The method includes scanning the voice recognition system for grammar data indicative of a system function, converting the grammar data to a usable command for access by a system user, and then storing the usable command in a system memory for use by the system user to carry out the system function.

In accordance with another aspect of the present invention, the method further comprises determining whether the usable command is present in the system memory.

In accordance with another aspect of the present invention, the method further comprises listening for commands spoken by the system user.

In accordance with another aspect of the present invention, the method further comprises determining whether a user's spoken command is a valid command.

In accordance with another aspect of the present invention, the method further comprises comparing the user's spoken command with a plurality of stored commands to determine whether the command is valid.

In accordance with yet another aspect of the present invention, a system for dynamically augmenting available voice commands in an automobile voice recognition system to actuate a vehicle subsystem is provided. The system includes a controller for scanning the voice recognition system for grammar data indicative of a system function, and wherein the controller converts the grammar data to a usable command for access by a system user, and then stores the usable command in a storage media for later use by the system user to carry out the system function.

Further objects, features and advantages of the invention will become apparent from consideration of the following description and the appended claims when taken in connection with the accompanying drawings.

### BRIEF DESCRIPTION OF THE DRAWINGS

FIGURE 1 is a schematic diagram of a voice recognition system that utilizes voice recognition technology to operate various vehicle subsystems in a vehicle, in accordance with the present invention;
FIGURE 2 is a block diagram of an embodiment of an in-vehicle voice recognition system, in accordance with the present invention;
FIGURES 3 and 4 are block diagrams illustrating how the voice system may be operated by a system user, in accordance with the present invention;
FIGURE 5 is a flow diagram illustrating a method for dynamically augmenting the voice recognition system, in accordance with the present invention; and
FIGURE 6 is a flow diagram illustrating a process for actuating the sub-systems connected to the voice system using dynamically augmented commands, in accordance with the present invention.

### DETAILED DESCRIPTION OF THE PREFERRED EMBODIMENTS

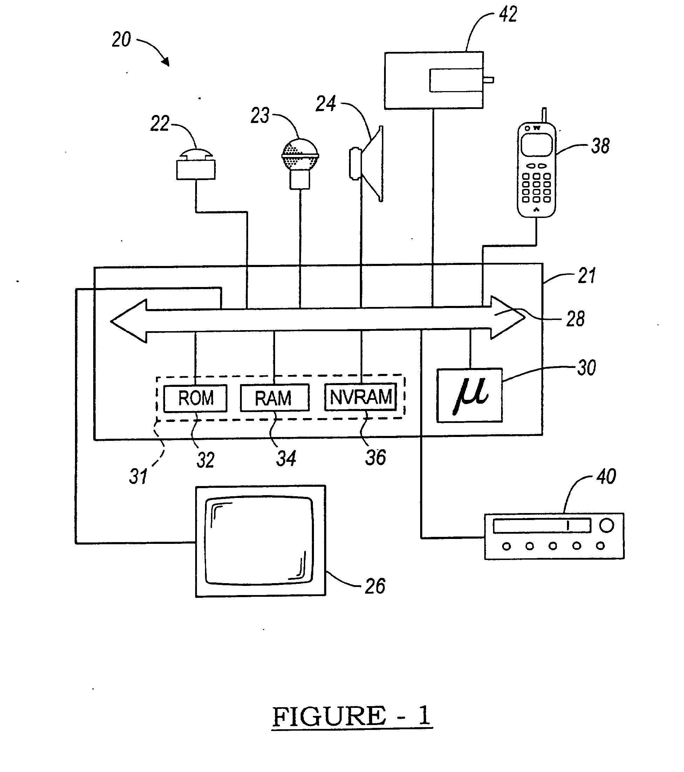

Referring now to Figure 1, an in-vehicle voice recognition activation system 20 is illustrated, in accordance with the present invention. System 20 includes a control module 21, in communication with a system activation switch 22, a microphone 23, and a speaker 24.

System 20, in an embodiment of the present invention, may include a display screen 26. Screen 26, for example, may be an electroluminescent display, a liquid crystal display, a thin film transistor (active matrix) display or the like. Display screen 26 provides a user of system 20 with system information. System information may include, for example, the system's status, available user commands, devices available for user operate, etc.

Control module 21 includes a communication bus 28 for electrically connecting and communicating electrical signals to and from the various devices connected to module 21. Further, module 21 has a microprocessor or central processing unit (CPU) 30 connected to bus 28 for processing the various signals communicated to CPU 30 through bus 28. Still further, module 21 has a plurality of electronic memory devices in communication with bus 28 for storing executable program code. The electronic memory devices 31 may include, for example, read only memory (ROM) 32, and random access memory (RAM) 34 and/or non-volatile RAM 36.

A plurality of user devices will generally be connected to module 21 and bus 28 to provide a user with multiple system features. For example, system 20 may include an in-vehicle phone system 38, a compact disc player 40, an MP3 digital music player 42, as well, as various other devices and/or subsystems.

In an embodiment of the present invention, a voice recognition program and/or executable code is stored on memory devices 31 for access and execution by CPU 30. System 20 provides a user with the capability to speak voice commands and using voice recognition technology including the executable codes stored in memory device 31, the system translates the user's voice commands into control signals which actuate the various vehicle subsystems.

System 20 typically has a first or initial set of voice commands available for an operator to utilize. However, when a new device and/or new media is added to system 20, a new set of additional commands need to be made available to the user. The present invention contemplates augmenting system 20's voice commands with additional commands that are specific to the device or media being added or presently available. In this way, the present invention dynamically adds voice commands or grammar to voice recognition system 20 each time a new device and/or media is added to the system.

In an embodiment of the present invention, voice recognition system information related to audio (CD, CDDJ, Mini disc, MP3 player, etc.) and or communication systems (cellular phone) is communicated to system 20 in order to simplify the user interface of these components. For example, information may be stored in data formats such as ASCI and transmitted between various vehicle subsystems and system 20. In this way, valid grammar commands may be generated for the user to access. For example, when a mini disc (or compact disc) is placed into a disc changer, the mini disc will share information or data related to that disc with the voice system, via the communication or network bus. This information or data may include the disc name or title, the name of each track or song on the disc, etc. The voice system 20 will then take this ASCI data and generate a voice grammar command based upon this information. The user may then select a mini disc and a song track by name. For example, the user may say "play Hotel California", where "Hotel California" is the name of a track or song on a particular music compact disc.

Alternatively, the same technique may be used for an in-vehicle phone system with an address book feature. For example, the name of a contact may be added to the active available grammar or commands by the same technique. Further, the present invention contemplates adding radio station call letters to the active grammar so that a user could say "tune WJR" and the radio channel would change to the appropriate frequency.

This technique is superior to current methods, which require a user to remember a specific track number or preset association with a song or station. For example, if a user wished to play a specific song on specific disc, they would have to know the list of songs and the order or specific location of a disc within a disc changer.

The present invention advantageously provides speech recognition system with additional information via text to speech (TTS) or speech synthesis. For example the user could request the name of all the disc/media stored in a remote disc changer. From the ASCI information and TTS technology the names of the discs could be read to the user by system 20. The user could query (via voice recognition) the name of the specific disc/media. For example, the user could say "what is disc three". The system could then acquire the ASCI information and using TTS read it back to the user.

In an embodiment of the present invention the user could request all of the tracks on the disc or media and have system 20 read the names back. They could also query (via voice recognition) the name of a specific song. For example, a user could ask "what is track seven". The system would then acquire ASCI information and using TTS read it back to the user.

In an embodiment of the present invention a user's phone book could be read back to them and/or navigated through. A user's phone contacts could be stored in a phone book of an in-vehicle phone, or a PDA device. Information could be transferred to system 20 via conventional wires or wirelessly via new technologies like Bluetooth.

The present invention contemplates navigating an MP3 player using dynamically augmented voice grammar commands. An MP3 disc could hold hundreds of selections. Satellite radio extensions could also be requested by a user by speaking the extension.

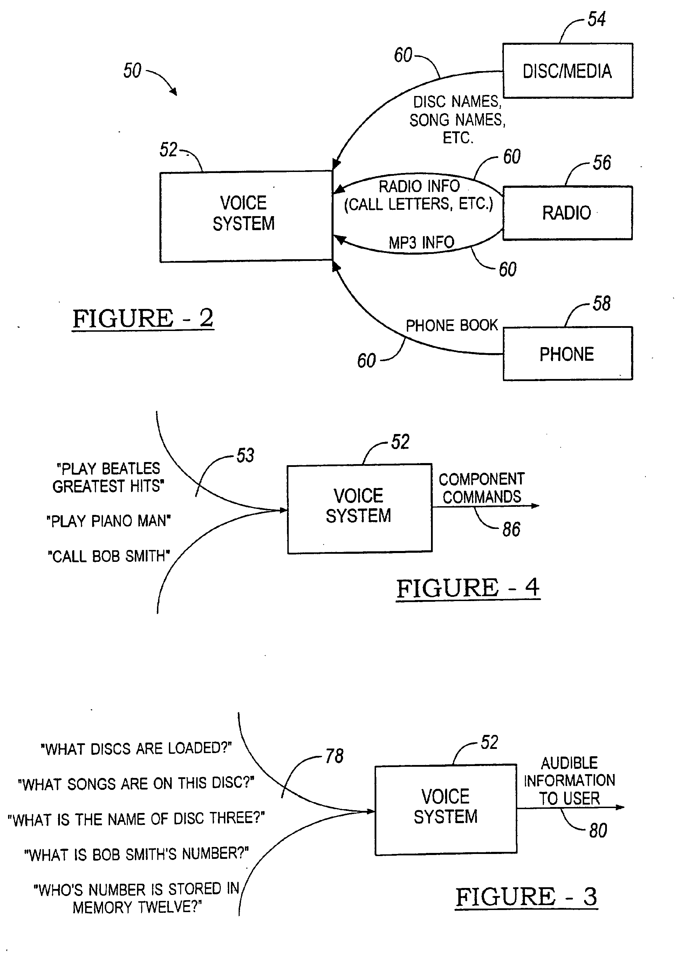

Referring now to Figure 2 an embodiment of an in-vehicle voice recognition system 50 is illustrated in block diagram form. In the present embodiment, voice recognition system 52 essentially includes the components of the previous embodiments and may further be interfaced with a variety of in-vehicle sub-systems, as will now be described.

Voice system 52 is in communication with, for example, a disk media sub-system 54, a radio 56 and a phone subsystem 58. Typically, these sub-systems are interfaced using electrical harnesses 16 and/or wireless communications, such as radio frequency or infrared technologies. Preferably, disk media sub-system 54 is a compact disk player or a DVD player. Information such as disk names, song names or titles, artists, etc. are transferred from the disk media sub-system 54 to voice system 52 automatically when new disks and other media are placed into the disk media sub-system. Similarly, radio sub-system 56 sends data, such as radio call letters and other like information to voice system 52. Other information such as MP3 data where radio 56 incorporates an MP3 player may also be sent to voice system 52. Phone sub-system 58 may send data regarding contacts in a phone address book to voice system 52 for access by a system user. Such data augments voice system 52's available valid voice commands and allows a system user to manipulate the aforementioned sub-system using voice commands which are dynamically changing and being made available to a system user.

Referring now to Figures 3 and 4 block diagrams illustrating how voice system 50 may be used are provided, in accordance with the present invention. For example, in Figure 3 a system user may request the disk media sub-system 54 to provide information regarding the number of disks, the songs on the disks, a name or title of a particular disk, etc. Likewise, a user may ask phone sub-system 58 information regarding entries in a phone address book. For example, the user may ask for a phone number stored in the phone book by saying the name associated with the phone number. For example, a user may ask "whose phone number is stored in" a particular location in the phone book by providing the memory location. This information is provided to the user through a speaker or other audible device 80.

With specific reference to Figure 4, it is illustrated in block diagram form the interaction between a user and voice system 52. For example, a user may input or speak a command 53 along with information regarding the current contents or operation of a particular sub-system. For example, a user may request a particular song on a disk placed within sub-system 54. Moreover, the user may communicate with other sub-systems such as the phone system 58 to place a call to a person listed in a phone book of phone sub-system 58. In response, voice system 52 would issue a component or sub-system command signal 86 to actuate the given sub-system.

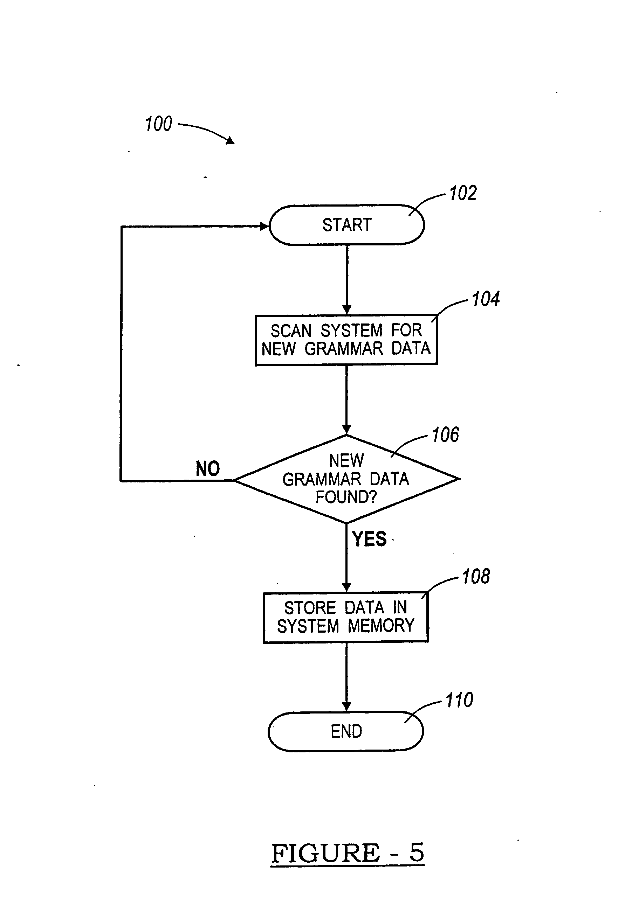

Referring now to Figure 5, a method for dynamically augmenting a voice recognition system is illustrated, in accordance with the present invention. Process 100 is initiated at block 102. At block 104 the voice system scans for new grammar data available from each of the sub-systems. At block 106 system 52 determines whether new grammar data has been found. If no new grammar data is available, the process returns to block 102. If new grammar data has been found, the data is stored in system memory for use by a system user, as represented by block 108. As such, the present invention provides dynamic augmentation of the available voice commands of voice system 52. After all available grammar has been stored for later use, the process is complete, as represented by block 110.

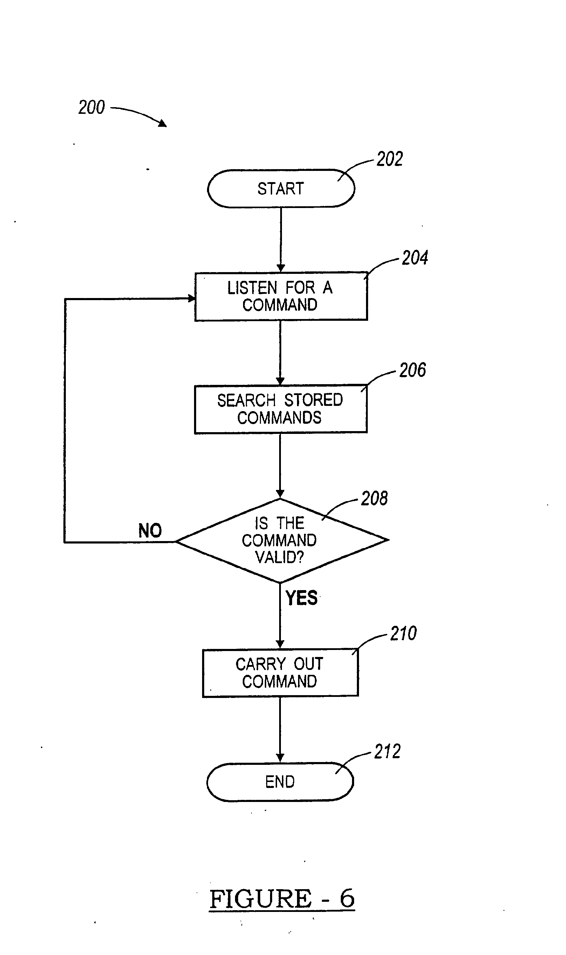

Referring now to Figure 6, a process for actuating the sub-systems connected to voice system 52 using dynamically augmented commands is further illustrated, in accordance with the present invention. The process is initiated at block 202 and the system listens for commands spoken by a system user, as represented by block 204. At block 206, the system searches the stored commands. The commands spoken by the user are then identified as valid commands by matching the spoken commands with previously stored commands, as represented by block 208. If a match is not found, the system determines that the command is not valid and listens for another command, as represented by block 208 and 204. If at block 208 the system determines that the commands are valid, the commands are carried out, as represented by block 210. In carrying out a user's valid command, the sub-systems are actuated. The process is complete after the sub-system has been actuated, as represented by block 212.

The foregoing discussion discloses and describes a preferred embodiment of the invention. One skilled in the art will readily recognize from such discussion, and from the accompanying drawings and claims, that changes and modifications can be made to the invention without departing from the fair scope of the invention as defined in the following claims.

## Claims

1. A method for dynamically augmenting available voice commands in an automobile voice recognition system to actuate a vehicle subsystem, the method comprising:
scanning the voice recognition system for a grammar data indicative of a system function;
converting the grammar data to a usable command for access by a system user; and
storing the usable command in a system memory for use by the system user to carry out the system function.

2. A method according to claim 1, further comprising determining whether the usable command is present in the system memory.

3. A method according to claim 1 or claim 2, further comprising listening for commands spoken by the system user.

4. A method according to any one of claim 1 to 3, further comprising determining whether a user's spoken command is a valid command.

5. A method according to claim 4 wherein determining whether a user's spoken command is a valid command includes comparing the user's spoken command with a plurality of stored commands.

6. A system for dynamically augmenting available voice commands in an automobile voice recognition system to actuate a vehicle subsystem, the system comprising:
a controller for scanning the voice recognition system for a grammar data indicative of a system function, and wherein the controller converts the grammar data to a usable command for access by a system user; and
a storage media for storing the usable command for use by the system user to carry out the system function.

7. A system according to claim 6, wherein the controller determines whether the usable command is present in the storage media.

8. A system according to claim 6 or claim 7, further comprising a microphone for listening for commands spoken by the system user.

9. A system according to any one of claim 6 to 8, wherein the controller determines whether a user's spoken command is a valid command.

10. A system according to any one of claim 6 to 9, wherein the grammar data is related to information stored on a removable storage media.
